## Europäisches Patentamt
## European Patent Office
## Office européen des brevets

(19)

(11) Publication number: **0 006 899**
**B1**

(12) **EUROPEAN PATENT SPECIFICATION**

(45) Date of publication of patent specification: **12.05.82**

(51) Int. Cl.³: **B 23 Q 7/00**

(21) Application number: **78900098.1**

(22) Date of filing: **28.08.78**

(86) International application number:
**PCT/US78/00073**

(87) International publication number:
**WO 79/00117 08.03.79 Gazette 79/5**

(54) **BAYONET CLAMPING APPARATUS FOR MACHINE TOOLS.**

(30) Priority: **31.08.77 US 829358**

(43) Date of publication of application:
**23.01.80 Bulletin 80/2**

(45) Publication of the grant of the patent:
**12.05.82 Bulletin 82/19**

(84) Designated Contracting States:
**DE FR GB**

(56) References cited:
**US - A - 2 421 957**
**US - A - 2 428 111**
**US - A - 2 888 052**
**US - A - 3 209 623**
**US - A - 3 654 838**

(73) Proprietor: BERGMAN, Raymond, A.
107 East Second Street
Minster, OH 45865 (US)

(72) Inventor: BERGMAN, Raymond, A.
107 East Second Street
Minster, OH 45865 (US)

(74) Representative: Bayliss, Geoffrey Cyril et al.
BOULT, WADE & TENNANT 27 Furnival Street
London EC4A 1PQ (GB)

Courier Press, Leamington Spa, England.

# Bayonet clamping apparatus for machine tools

## Technical Field

The present invention relates to a clamping system for clamping a workpiece or workpiece fixture to the supporting table of a machine tool, and in particular to a bayonet clamping system which is suitable for use with work tables when the fixture is floatingly supported on a film of pressurized air during movement from one machining position to another.

## Background of the Invention

Whenever a workpiece is machined, it must be accurately positioned on the work table in proper spatial relationship to the cutting tool. Since the tool will exert considerable force on the workpiece during machining, it is also necessary that it be securely anchored or clamped in the desired position. Heretofore, work tables have been provided with T-slots normally running the entire length of the table and adapted to receive T-bolts or other fastening elements which engage clamping bars or the like for the purpose of clamping the workpiece to the table. A serious drawback to this arrangement is that considerable amounts of chips, shavings, and other debris produced during machining collect in the T-slots and frequent table clean-up by the operator is necessary.

US Patent No 3209623 discloses an air float table which has a plurality of fluid passages to produce a cushion of pressurized fluid to support a substantially friction free movement over the table surface. Single points locating pins are utilized to locate a fixture at the desired positions on the table for machining of a workpiece and the locating pins can be retracted by fluid pressure when the workpiece has reached the required position. The workpiece is clamped in the required position by closing off the air pressure supply and applying a vacuum to the table. Very substantial forces may be imposed on a workpiece by a machine tool operating on the workpiece and restraining the workpiece by only a vacuum applied to it through the work table may not suffice to prevent movements of the workpiece however slight. Moreover any foreign matter trapped between the workpiece under surface and the table surface whilst not preventing the floating of the workpiece over the table when subjected to air pressure, could prevent an effective vacuum being formed under the workpiece to hold the workpiece in place on the table.

US Patent No. 2888052 relates to a bench clamp which is locked to an opening in a supporting structure by means of a head passing through a slot. The specification discloses only a single female clamp element for accepting a plurality of clamps to accommodate workpieces of different sizes. The specification is concerned only with a simple bench clamp and there is no disclosure of an air float table.

## Disclosure of Invention

The present invention overcomes the problems and disadvantages of the prior art by providing a plurality of openings distributed over the table surface into which clamping elements are insertable and locked therein by a relatively simple motion. By selecting the appropriate openings for insertion of the clamping elements, clamping pressure may be applied at any desired position on the table. In one embodiment, automatic clamping is effected by a hydraulic piston and cylinder mounted within the table and engageable with the locking pin to draw it downwardly and exert clamping pressure when actuated. In another embodiment, automatic clamping is effected by a hydraulic cylinder mounted toward the top of the clamping elements and exerts a downward pressure when actuated.

The invention provides a machine including a table with an upper surface adapted to support a workpiece or workpiece fixture thereon and having a plurality of fluid passages leading to said table surface and means for supplying a fluid under pressure through said passages to the table upper surface whereby a workpiece or workpiece fixture can be supported on a cushion of pressurized fluid for substantially friction free movement over the surface of the table, wherein said table has a plurality of openings in the upper surface; wherein removable cover means cover selected ones of said openings to prevent loss of air pressure in the cushion of pressurized fluid and also prevent lodging of chips and other debris in the openings without obstructing movement of a workpiece or a workpiece fixture over the table, wherein a plurality of first clamp elements are mounted within said table and accessible respectively below through said openings; wherein a second clamp element is adapted to be removably inserted in a selected said opening and includes means for selectively mechanically interlocking with the first clamp element mounted below a selected opening; wherein a third element on said second clamp element is adapted to engage a workpiece fixture supported on said table surface; and wherein means are provided for drawing said third element towards said table surface whereby a workpiece or fixture supported on said table and engaged by said third element will be clamped therebetween.

It is an object of the present invention to provide a bayonet clamping system for machine tools including a plurality of female clamp elements which are distributed throughout the table and accessible through openings in the table surface so that one or more male clamp elements may be inserted through selected ones of the openings and engaged with the female element positioned thereunder by a simple twisting motion.

Another object of the present invention is to provide a bayonet clamping system for machine tools wherein clamping pressure at a wide variety of positions on the table may be applied.

A further object of the present invention is to provide a bayonet clamping system for machine tools having tables of the air float type wherein the table may be formed without T-slots thereby enabling lower pneumatic pressures. For example, heavy loads can be lifted .01778 cm. with as little as 1.41 kg/sq. cm. of pneumatic pressure.

A further object of the present invention is to provide a bayonet clamping system for machine tools enabling a relatively smooth and uninterrupted table work surface.

A still further object of the present invention is to provide a bayonet clamping system for machine tools which reduces machine down time for purposes of clearing chips and shavings out of the T-slots, as is necessary in existing work tables.

Yet another object of the present invention is to provide a bayonet clamping system wherein clamping pressure may be exerted automatically by means of fluid actuators.

Brief Description of the Drawings

The exact nature of the present invention will become more apparent upon reference to the detailed description taken in conjunction with the accompanying drawings in which:

Figure 1 is a perspective view of a machine tool wherein the supporting table is provided with a bayonet clamping system according to the present invention;

Figure 2 is a top plan view of the table shown in Figure 1;

Figure 3 is a sectional view of one of the valved connections leading from a passage in the table to the surface on which the workpiece fixture is supported;

Figure 4 is a sectional view of one of the locating pins shown engaged with a corresponding socket in the lower surface of the workpiece fixture;

Figure 5 is a sectional view of a retractable centering pin;

Figure 6 is a sectional view of one of the hydraulic actuators of Figure 1 taken along line 6—6;

Figure 7 is a side elevational view of one of the male clamping elements;

Figure 8 is an end view of the male clamping element shown in Figure 7;

Figure 9 is a top plan view of the hydraulic actuator shown in Figure 6 with the pin removed;

Figure 10 is a hydraulic schematic for the clamping system of the present invention;

Figure 11 is a sectional view of a modified form of the present invention;

Figure 12 is an end view of the male clamp element shown in Figure 11;

Figure 13 is a sectional view of a manual clamping device according to the present invention; and

Figures 14 and 15 are perspective and sectional views respectively, of a modified form of the present invention.

Best Mode for Carrying Out the Invention

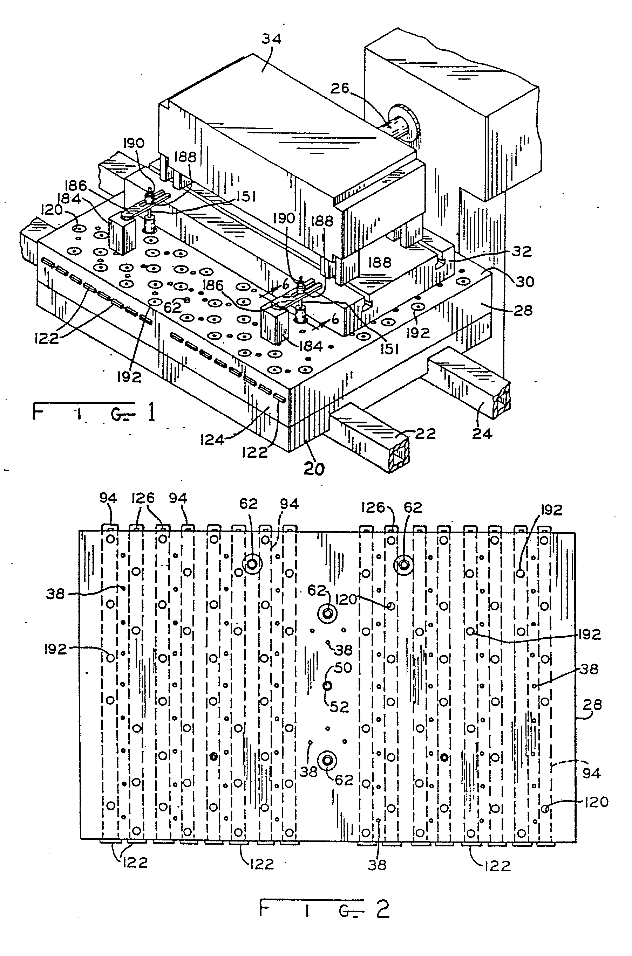

Referring now to the drawings, Figure 1 is a perspective view of a machine tool having a bed 20 supported on ways 22 and 24 and a working tool 26, which may be a boring tool, milling tool or the like according to well known practice in the machine tool art. A table or plate 28 is fixedly secured to bed 20 and includes an upper surface 30 on which is supported a workpiece fixture 32 having a workpiece 34 mounted thereon.

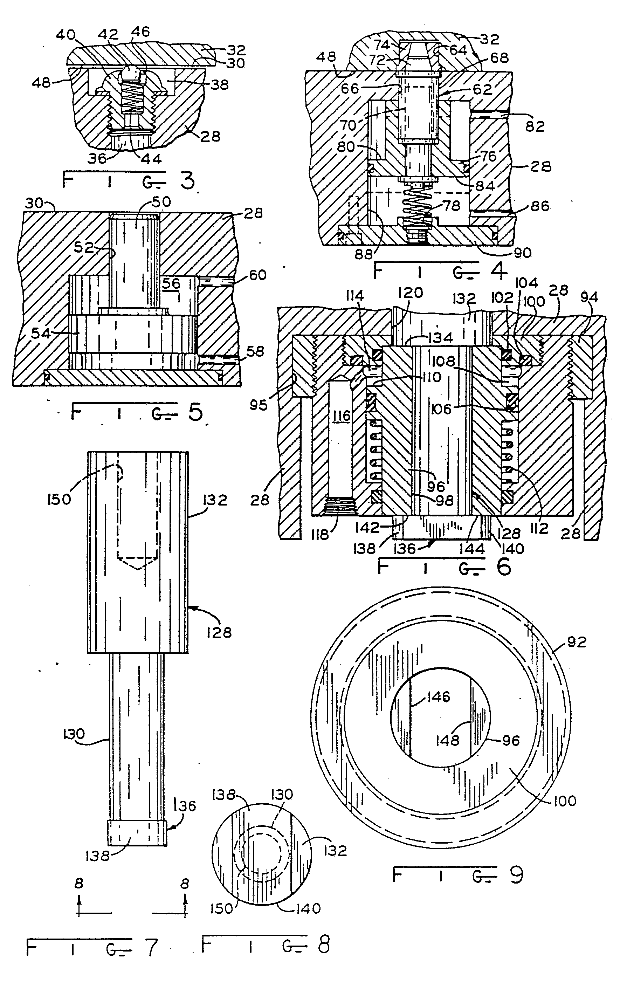

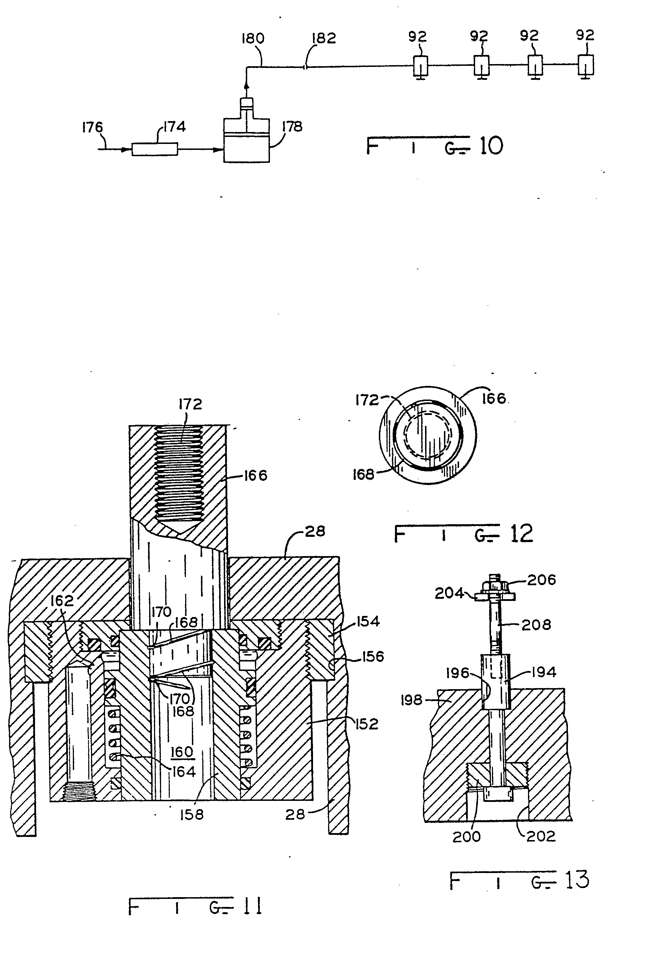

Table 28 is provided with a plurality of fluid passageways 36 (Figure 3) which are connected via a control valve (not shown) with a supply of fluid under pressure. The fluid under pressure is preferably air, but could conceivably comprise another fluid medium. Passageways 36 extend upwardly through table 28 and communicate with openings 38 in the surface 30 of the table 28. As shown in Figures 1 and 2, there are many such openings 38 distributed over the table surface 30 so as to provide a film of pressurized air wherever the fixture 32 is positioned. The upper end of each passageway is closed by a valve comprising a body 40 which may be threaded into passageway 36 and the top of which is disposed slightly below the level of table surface 30. Valve body 40 is tubular and has captured therein a valve ball 42 which projects slightly above the surface 30 of table 28 as shown in Figure 3. A spring 44 urges ball 42 into its upper closed position in which it contacts circular valve seat 46.

When the fixture 32 is moved on table 28 and the downwardly facing surface 48 of fixture 32 engages ball 42, the ball 42 will be depressed as shown in Figure 3 and admit air under pressure from passageway 36, between seat 46 and ball 42 to the space between surfaces 48 and 30. The pressure of the fluid is so adjusted that a fluid film will be established which will floatingly support fixture 32 thereon. This enables the fixture to be easily moved about on table 28 to the desired position. Obviously, when the supply of fluid is terminated, fixture 32 will come to rest directly on table surface 30. Each opening 38 includes a valve identical to that shown in Figure 3. If desired, the fixture supporting pneumatic pressure could be supplied from the bottom of the fixture itself rather than from the table.

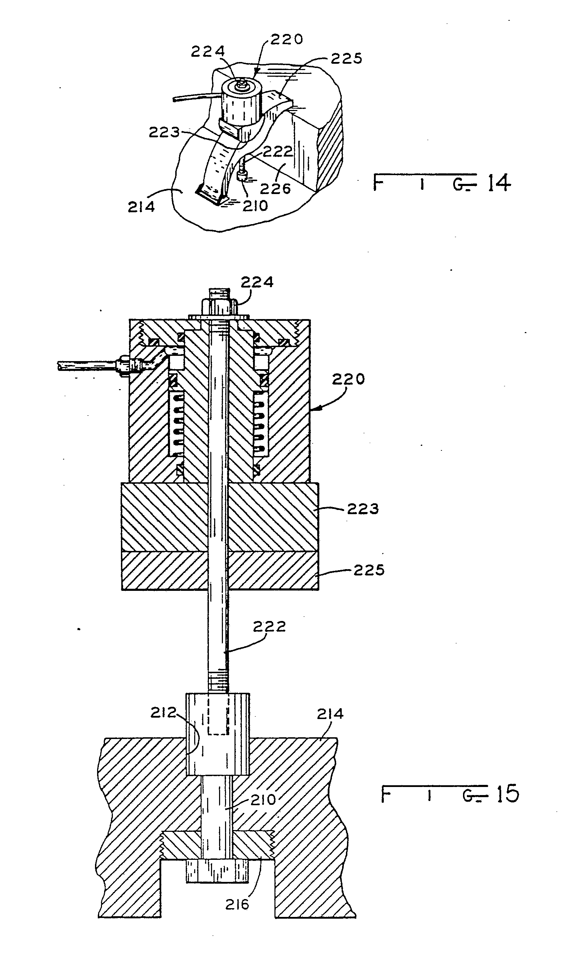

It is essential that the workpiece 34 be accurately located for machining, and to this end, table 28 includes a main centering pin 50 (Figure 5) reciprocably received within a bore 52 in table surface 30. Integrally formed with pin 50 is a piston 54 reciprocably received within chamber 56 and which is actuated by means of fluid pressure applied through passageways 58 and 60. Fixture 32 is provided with a downwardly opening bore (not shown) which receives centering pin 50 when the same is extended to its upper position above the surface 30 of table 28. Alternatively, a slot (not shown) in the lower surface 48 of fixture 32 may be provided so as to enable translation of fixture 32. When the fixture 32 is introduced into the machine, it is set down on table 28 with the pin 50 received in the corresponding bore or slot in fixture 32. When the fluid pressure film is established between the fixture 32 and table 28, fixture 32 can rotate freely about the axis of pin 50 and, in the case where a slot is provided in fixture 32, both translation and rotation are possible.

In addition to pivot pin 50, there are additional locating pins 62 which serve to accurately locate the fixture in various predetermined positions. The locating pins 62 are located in precise positions on table 28 with reference to the tool 26. These pins 62 are engageable with sockets 64 provided in the bottom surface of fixture 32 and which are also accurately located within the fixtures 32 with reference to the location of pins 62. Thus, when one or more pins 62 engage the corresponding sockets 64 in the bottom of the fixture 32, the fixture 32 will be in an accurately located position on the table 28. When the centering pin 50 engages the fixture, only one of locating pins 62 is required to determine fixture location. Alternatively, two locating pins 62 could be employed and the fixture location determined thereby without depending on pivot pin 50.

Table 28 is provided with bores 66 each of which at the upper end therof has an elongated bushing 68. Pin 70, having a tapered upper end 72 adapted for seating in the correspondingly tapered bushing 74 in socket 64, is slidably received in bushing 68. At the lower end thereof, pin 70 is connected with a double acting piston 76 biased upwardly by spring 78 to the position shown in Figure 4. Each piston 76 has an upwardly facing fluid surface 80 adapted to be acted on by fluid from passageway 82 to drive the piston 76 and pin 70 downwardly until the upper end 72 of the pin is below the upper surface 30 of table 28. Alternatively, a supply of fluid pressure to the downwardly facing surface 84 from passageway 86 will drive piston 76 upwardly to effect firm engagement of the tapered end 32 with bushing 74. The lower end of bore 88 is closed by cover plate 90. As shown in Figure 2, table 28 is provided with a number of locating pins 62 so that a number of successive machining positions of workpiece 34 and fixture 32 may be realized.

By supplying air under pressure to the upper side 80 of piston 76, pin 70 will be moved downwardly out of bushing 74. If fluid under pressure is then introduced between fixture 32 and table 28, fixture 32 may be moved to the desired position. With the fixture 32 in this position, pneumatic pressure is vented from passageway 82 and pin 70 will move upwardly under the pressure of spring 78 until its tapered portion 72 engages bushing 74. Pin 70 may be driven with more force into bushing 74 by admitting pressure through conduit 86. With the fixture 32 accurately located in this manner, the supply of pneumatic pressure between fixture 32 and table 28 is then terminated and fixture 32 will come to rest on surface 30. Additional details relating to the air float table described herein may be found in US Patent No. 4,058,885.

One embodiment of the present invention is illustrated in Figures 6, 7, 8, 9 and 10. It comprises a hydraulic cylinder 92 threadedly secured to an elongated plate 94 which is slidably received within elongated slots in table 28. A specially designed piston 96 is reciprocably received within cylinder 92 and has an elongated opening 98 extending therethrough. Bushing 100 is threadedly secured to piston 92 and sealed against piston 96 and cylinder 92 by means of O-rings 102 and 104, respectively. Seal 106 seals the other end of working chamber 108 which is defined on one end by annular piston face 110 and on the other end by bushing 100. Piston 96 is urged to its upper position (Figure 6) by spring 112 and is retracted to its lower position when fluid under pressure, either hydraulic or pneumatic, is admitted to working chamber 108 through passageways 114 and 116. Port 118 is adapted to be connected to a source of fluid under pressure through any suitable conduit (not shown).

Cylinders 92 and their respective pistons 96 are located beneath openings 120 in table surface 30. Any desired number of openings 120 and piston and cylinders 96, 98 may be provided but it is preferable that there be a sufficient number to permit clamping at any desired position on the table surface 30. Cylinders 92 are accurately positioned underneath their respective openings 120 by plates 94 which slide into T-slots 95 until their ends 122, which are wider than slots 95, abut the side 124 of table 28. Any suitable means, such as tapered pins 126, may be employed for locking plates 94 in their respective T-slots 95.

The male clamping element comprises a pin 128 (Figures 7 and 8) having a shank portion 130 adapted to be inserted through the opening or bore 98 of piston 96, an enlarged head 132 which is dimensioned to be received within opening 120 and abut annular shoulder 134, and a locking portion 136 having a pair of lugs or ears 138 and 140. Locking portion 136 is dimensioned to pass through piston bore 98 when lugs 138 and 140 are aligned with the longitudinal dimension of bore 98. When pin 128 is rotated a quarter turn about its axis, however, lugs 138 and 140 are positioned to positively lock pin 128 in piston 96 (Figure 6). As shown in Figure 9, bore 98 is somewhat elongated in the horizontal direction and the downwardly facing surfaces 142 and 144 of piston 96 will abut lugs 138 and 140 when pin 128 is rotated a quarter turn. The head 132 of pin 128 is provided with a threaded socket 150 adapted to receive a suitably threaded bolt or rod 151 for the purpose described below.

Another embodiment of the present invention is shown in Figures 11 and 12 and comprises a cylinder 152 threadedly attached to elongated plate 154, the latter being received within a T-slot 156 in table 28. A piston 158 is reciprocably received in cylinder 152 and includes a cylindrical bore 160 extending therethrough. Piston 158 is retracted by the application of fluid pressure through passageway 162 and is urged to its upward position (Figure 11) by compressed spring 164. With the exception of the configuration of bore 160, the device shown in Figure 11 is virtually identical to that shown in Figure 6.

In this embodiment, the pin 166 is threadedly secured to piston 154 by means of a pair of interrupted high pitch threads 168 which engage with corresponding female threads 170. The pitch of threads 168 and 170 is sufficiently high to enable pin 166 to be tightened within piston 158 with less than a full turn, for example, a quarter turn. Pin 166 includes female threads 172 so as to permit connection of a threaded rod similar to rod 151. If desired, regular, non-interrupted threads may be employed.

The hydraulic system for the clamping system described is shown schematically in Figure 10 and comprises a three-way valve 174 connected to a source of pneumatic pressure over line 176, an air over hydraulic booster 178 having a high pressure hydraulic output line 180 which connects with cylinders 92 (or cylinders 152) through quick disconnect coupler 182.

The hydraulic bayonet clamping system described above operates as follows. Fixture 32 is floated on its film of pressurized air to the desired position, accurately located by means of locating pins 70 and then brought to rest on table 28 by interrupting the supply of pneumatic pressure to passageways 36. In the case of the embodiment shown in Figures 6—9, pins 128 are inserted through their respective openings 120 and pistons 196 and then turned 90° so as to be locked in place (Figure 6). Blocks 184 are then set in place and slotted clamping bars 186 are placed over rods 151 and suspended between blocks 184 and fixture 32. Washers 188 are placed over the ends of rods 151 and tightened against clamping bars 186 by nuts 190. Downward pressure on clamping bars 186 is exerted by admitting fluid under pressure into working chamber 108 which urges piston 96 and therefore pin 128 downwardly. If the fixture 32 is to be moved, the above steps are reversed and another pair of piston and cylinders 92, 96 are selected. In order to prevent chips and shavings from collecting in openings 120, they are equipped with covers 192 when not in use.

The embodiment of Figure 11 operates in a similar fashion to the embodiment just described except that pin 166 is screwed into piston 158. This embodiment has the advantage that a smaller piston and cylinder may be employed.

A manual clamping embodiment is shown in Figure 13 and comprises a pin 194 identical to pin 128 received in a stepped opening 196 in table 198. The female element 200, which has an internal horizontal section similar to piston 96, is threaded into a downwardly facing bore 202 in table 198. Clamping bar 204 is pulled downwardly by tightening nut 206 on threaded rod 208, which is in turn threadedly connected to pin 194.

A further modification of the present invention is illustrated in Fiugres 14 and 15 and comprises a pin 210 similar to pin 194 received in a stepped opening 212 in table 214. The female element 216 is similar to element 200 and threaded into bore 218 and engages the end of pin 210. Hydraulic cylinder 220, which is similar to the one shown in Figures 6 and 11, is received over rod 222 between nut 224 and clamping bar 225 and spacer 223. When energized, cylinder 220 exerts downward force on bar 225 through spacer 223 so as to clamp a workpiece 226 as shown in Figure 14. All of the clamps are preferably energized simultaneously.

While this invention has been described as having a preferred design, it will be understood that it is capable of further modification. This application is, therefore, intended to cover any variations, uses, or adaptations of the invention following the general principles thereof including such departures from the present disclosure as come within known or customary practice in the art to which this invention pertains, and as may be applied to the essential features hereinbefore set forth and fall within the scope of this invention.

**Claims**

1. A machine tool including a table (28) with an upper surface (30) adapted to support a workpiece or workpiece fixture (32) thereon and having a plurality of fluid passages leading to said table surface and means for supplying a fluid under pressure through said passages to the table upper surface whereby a workpiece or workpiece fixture can be supported on a cushion of pressurised fluid for substantially friction free movement over the surface of the table, characterised in that said table has a plurality of openings (120, 196) in the upper surface; in that removable cover means (192) cover selected ones of said openings to prevent loss of air pressure in the cushion of pressurised fluid and also prevent lodging of chips and other debris in the openings without obstructing movement of a workpiece or a workpiece fixture over the table, in that a plurality of first clamp elements (96) are mounted within said table and accessible respectively below through said openings; in that a second clamp element (128) is adapted to be removably inserted in a selected said opening and includes means (136) for selectively mechanically inter-locking with the first clamp element mounted below a selected opening; in that a third element (186) on said second clamp element is adapted to engage a workpiece or workpiece fixture supported on said table surface; and in that means (92) are provided for drawing said third element towards said table surface whereby a workpiece or fixture supported on said table and engaged by said third element will be clamped therebetween.

2. The apparatus of claim 1 wherein said means for interlocking said first and second clamp elements includes means (138) whereby interlocking is effected by first engaging said first and second elements (96, 128) and then rotating said second element (128).

3. The apparatus of claim 2 wherein said means for interlocking includes:

a bore (98) in each of said first elements (96) in alignment with its respective said opening (120), and lug means (138) on said second element (128) adapted to be inserted through said bore and to interlock with said first element when said second element is turned in said opening.

4. The apparatus of claim 3 wherein said bore (98) has a long dimension and a short dimension each generally parallel to said table surface (30), said lug means (138) has a long dimension and a short dimension each generally parallel to said table surface when positioned in said opening (120), said lug long and short dimensions are less than or equal to said bore long and short dimensions, respectively, and said lug long dimension is greater than said bore short dimension.

5. The apparatus of claim 2 wherein said second element is a pin (166) and said means for interlocking includes interrupted high pitch threads (168) on said pin and a correspondingly threaded socket (160) in each of said first elements (158) aligned with their respective said openings (120).

6. The apparatus of claim 1 wherein said means for drawing said third element (186) towards said table (28) includes a power actuator (92) operatively connected to said first element.

7. The apparatus of claim 6 wherein said means for drawing said third element (186) includes a fluid actuated piston (96).

8. The apparatus of claim 1 wherein said means for drawing said third element (186) toward said table (28) includes a power actuator (220) engaging said third element from above.

9. The apparatus of claim 8 wherein said third element includes a pin (222) extending upwardly from said table and a clamp bar (225) adapted to engage a workpiece or fixture, and said power actuator (220) is a hydraulic cylinder device received over said rod and in engagement with said clamp bar.

10. The apparatus of any of claims 1 to 9 wherein said cover means (192) are substantially flush with said table surface (30) when in place.

11. The apparatus of any of claims 1 to 9 wherein said means for drawing said third element (186) toward said table surface comprises piston and cylinder fluid actuators (220) mounted within said table (28) beneath the upper surface (30) thereof, one of each said piston (96) or cylinder (92) being stationary secured to said table, and the other of said pistons (96) or cylinder (92) being fluid actuated said first clamp element (96) being connected respectively to said the other of said piston or cylinder.

12. The apparatus of claim 11 wherein said second clamp element (128) comprises a pin (166) and said means for mechanically interlocking includes respective bores in said other of said pistons (96) or cylinders (92) and lug means (138) on said pin adapted to be inserted into any one of said bores and interlock with the respective said the other of said pistons or cylinder when said pin is turned.

13. The apparatus of claim 11 wherein said second clamp element is a pin (166) and said means for mechanically interlocking includes high pitch threads (168) on said pin and correspondingly threaded sockets (160) in said the other of said pistons and cylinders.

14. The apparatus of any of claims 11 to 13 including a slot (95) in said table positioned beneath and parallel to said table surface (30), and a mounting plate (94) slidably received in said slot, at least some of said fluid actuators being mounted in said plate, said plate and said some of said fluid actuators being removable from said table (28) as a unit.

**Revendications**

1. Machine-outil comprenant une table (28) ayant une surface supérieure (30) destinée à supporter une pièce ou un dispositif de montage de pièce (32) sur elle et ayant plusieurs passages de fluide débouchant à la surface de la table, et un dispositif destiné à transmettre un fluide sous pression par ces passages vers la surface supérieure de la table, de manière qu'une pièce ou un dispositif de montage de pièce puisse être supporté sur un coussin de fluide sous pression et puisse se déplacer librement pratiquement sans frottement au-dessus de la surface de la table, caractérisée en ce que la table a plusieurs ouvertures (120, 196) à sa face supérieure, en ce qu'un dispositif amovible de recouvrement (192) recouvre des ouvertures choisies afin d'empêcher une perte de pression d'air dans le coussin de fluide sous pression et empêche aussi le logement de copeaux et d'autres débris dans les ouvertures, sans gêner le déplacement d'une pièce ou d'un dispositif de montage de pièce sur la table, en ce que plusieurs premiers éléments (96) de fixation sont montés dans la table et sont accessibles au-dessous des ouvertures, en ce qu'un second élément de fixation (128) est destiné à être introduit temporairement dans une ouverture choisie et comprend un dispositif (136) de verrouillage mécanique sélectif du second élément sur le premier élément de fixation monté au-dessous d'une ouverture choisie, en ce qu'un troisième élément (186) monté sur le second élément de fixation est destiné à coopérer avec une pièce ou un dispositif de montage de pièce supporté sur la surface de la table, et en ce qu'un dispositif (92) destiné à tirer le troisième élément vers la surface de la table de manière qu'une pièce ou un dispositif de montage supporté sur la table et coopérant avec le troisième élément soit fixé entre eux.

2. Appareil selon la revendication 1, caractérisé en ce que le dispositif de verrouillage du premier et du second élément de fixation comprend un dispositif (138) assurant le verrouillage d'abord par mise en prise du premier et du second élément (96, 128) puis par rotation du second élément (128).

3. Appareil selon la revendication 2, caractérisé en ce que le dispositif de verrouillage comprend
un alésage (98) formé dans chacun des premiers élément (96) dans l'alignement de l'ouverture correspondante (120), et un dispositif à pattes (138) formé sur le second élément (128) et destiné à pénétrer dans l'alésage et à se verrouiller sur le premier élément lorsque le second élément est tourné dans l'ouverture.

4. Appareil selon la revendication 3, caractérisé en ce que l'alésage (98) a une grande dimension et une petite dimension toutes deux sensiblement parallèles à la surface de la table (30), le dispositif à pattes (138) a une grande dimension et une petite dimension, sensiblement parallèles à la surface de la table, lorsque ce dispositif est placé dans l'ouverture (120), la grande et la petite dimension des pattes étant inférieures ou égales à la grande et à la petite dimension de l'alésage respectivement, la grande dimension des pattes étant supérieure à la petite dimension de l'alésage.

5. Appareil selon la revendication 2, caractérisé en ce que le second élément est une broche (166) et le dispositif de verrouillage comprend des filets interrompus (168) à grand pas formés sur la broche et un taraudage correspondant (160) formé dans chacun des premiers éléments (158) alignés sur les ouvertures correspondantes (120).

6. Appareil selon la revendication 1, caractérisé en ce que le dispositif destiné à tirer le troisième élément (186) vers la table (28) comporte un organe de manoeuvre (92) commandé et raccordé au premier élément lors du fonc- tionnnement.

7. Appareil selon la revendication 6, caractérisé en ce que le dispositif destiné à tirer le troisième élément (186) comprend un piston (96) commandé par un fluide.

8. Appareil selon la revendication 1, caractérisé en ce que le dispositif destiné à tirer le troisième élément (186) vers la table (28) comprend un organe de manoeuvre (220) commandé qui coopère avec le troisième élément par-dessus.

9. Appareil selon la revendication 8, caractérisé en ce que le troisième élément comprend une tige (222) dépassant au-dessus de la table et une barre de fixation (225) destinée à coopérer avec une pièce ou un dispositif de montage, et le dispositif de manoeuvre (220) commandé est un vérin hydraulique disposé sur la tige et coopérant avec la barre de fixation.

10. Appareil selon l'une quelconque des revendications 1 à 9, caractérisé en ce que le dispositif de recouvrement (192) est disposé pratiquement au niveau de la surface de la table (30) lorsqu'il est en place.

11. Appareil selon l'une quelconque des revendications 1 à 9, caractérisé en ce que le dispositif destiné à tirer le troisième élément (186) vers la surface de la table comprend des organes de manoeuvre (220) sous forme de vérins montés dans la table (28) au-dessous de sa surface supérieure (30), le piston (96) ou le cylindre (92) de chaque vérin étant fixé à la table, le cylindre (92) ou le piston (96) respectivement de chaque vérin étant déplacé par un fluide, le premier élément (96) de fixation étant raccordé au cylindre ou au piston respectivement.

12. Appareil selon la revendication 11, caractérisé en ce que le second élément (128) de fixation est une broche (166) et le dispositif de verrouillage mécanique comprend des alésages formés dans le cylindre (92) ou le piston (96) respectivement, et des pattes (138) formées sur la broche et destinées à pénétrer dans l'un des alésages et à assurer le verrouillage sur le cylindre ou le piston respectivement lorsque la broche est tournée.

13. Appareil selon la revendication 11, caractérisé en ce que le second élément de fixation est une broche (166) et le dispositif de verrouillage mécanique comprend des filets de pas élevé (168) formés sur la broche et un taraudage correspondant (160) formé sur le cylindre ou le piston respectivement.

14. Appareil selon l'une quelconque des revendications 11 à 13, caractérisé en ce qu'il comprend une fente (95) formée dans la table au-dessous de la surface (30) de celle-ci et parallèlement à cette surface, et une plaque de montage (94) qui peut coulisser dans la fente, certains au moins des dispositifs de manoeuvre à fluide étant montés dans la plaque, la plaque et ces dispositifs de manoeuvre pouvant être retirés de la plaque (28) comme un tout.

**Patentansprüche**

1. Werkzeugmaschine, umfassend einen Tisch (28) mit einer oberen Fläche (30), die zum Tragen eines Werkstückes oder einer Werkstück-Spannvorrichtung (32) eingerichtet ist mit einer Mehrzahl von Fludkanälen, die zur genannten Tischfläche führen sowie Mittel zum Zuführen von Flud durch die genannten Kanäle zur oberen Tischfläche, wobei ein Werkstück oder eine Werkstück-Spannvorrichtung auf einem Kissen von unter Druck stehendem Medium getragen sein kann, um eine im wesentlichen reibungsfreie Bewegung auf der Fläche des Tisches zu erlauben, dadurch gekennzeichnet, daß der Tisch eine Mehrzahl von Öffnungen (120, 196) in der oberen Fläche aufweist; daß ein abnehmbarer Deckel (192) bestimmte dieser genannten Öffnungen abdeckt, um Druckluftverluste in dem Kissen des Druckmediums zu vermeiden sowie das Ablagern von Schnitzeln und anderen Abfällen in den Öffnungen zu verhindern, ohne die Bewegung eines Werkstückes oder einer Werkstück-Spannvorrichtung über dem Tisch zu behindern, daß eine Mehrzahl von ersten Spannelementen (96) am Tisch montiert und jeweils von unten durch die genannten Öffnungen zugänglich ist, daß ein zweites Spannelement (128) derart gestaltet ist, daß es in eine bestimmte Öffnung einführbar ist und Mittel (136) zum wahlweisen mechanischen Verriegeln mit dem ersten, unterhalb einer vorbestimmten Öffnung montierten Klemmelement umfaßt; daß ein drittes Element (186) auf dem genannten zweiten Klemmelement derart gestaltet ist, daß es mit einem Werkstück oder einer Werkstück-Spannvorrichtung, die von der genannten Tischfläche getragen sind, in Eingriff gelangt; und daß Mittel (92) vorgesehen sind, um das genannte dritte Element gegen die genannte Tischfläche zu ziehen, wobei ein Werkstück oder eine Spannvorrichtung, von dem genannten Tisch getragen und mit dem genannten dritten Element in Eingriff gebracht, hier zwischen eingespannt werden.

2. Einrichtung nach Anspruch 1, dadurch gekennzeichnet, daß das genannte Mittel zum gegenseitigen Verriegeln des ersten und des zweiten Spannelementes Mittel (138) umfassen, durch welche das gegenseitige Verriegeln durch ein erstes Ineingriffbringen des ersten und des zweiten Elementes (96, 128) und ein anschließendes Rotieren des zweiten Elementes (128) umfaßt.

3. Einrichtung nach Anspruch 2, wobei das genannte Mittel zum gegenseitigen Verriegeln umfaßt: eine Bohrung (98) in jedem der genannten ersten Elemente (96) in Ausrichtung mit seiner zugehörenden, genannten Öffnung (120) sowie Zapfen (138) auf dem genannten zweiten Element (128), gestaltet, um in die genannten Bohrung eingeführt zu werden und eine Verriegelung mit dem genannten ersten Element dann herzustellen, wenn das genannte zweite Element in der genannten Öffnung gedreht wird.

4. Einrichtung nach Anspruch 3, dadurch gekennzeichnet, daß die genannte Bohrung (98) eine lange Erstreckung und eine kurze Erstreckung aufweist, deren jede im wesentlichen parallel zur genannten Tischfläche (30) verlaufen, daß der genannte Zapfen (138) eine lange Erstreckung und eine kurze Erstreckung aufweist, deren jede bei Einsetzen in die genannte Öffnung (120) im wesentlichen parallel zu der genannten Tischfläche verläuft, und daß die kurze und die lange Erstreckung des genannten Zapfens jeweils geringer oder gleich der langen bzw. der kurzen Erstreckung der genannten Bohrung sind und die genannte lange Erstreckung des Zapfens größer als die genannte kurze Erstreckung der Bohrung ist.

5. Einrichtung nach Anspruch 2, dadurch gekennzeichnet, daß das zweite Element ein Stift (166) ist, und daß das Mittel zum gegenseitigen Verriegeln unterbrochene Gewinde hoher Steigung (168) auf dem genannten Stift sowie dementsprechend in jedem der genannten ersten Elemente (158) mit ihren jeweiligen Öffnungen (120) ausgerichteten Elementen befindlichen Gewindesockel (160) aufweist.

6. Einrichtung nach Anspruch 1, dadurch gekennzeichnet, daß das genannte Mittel zum Ziehen des genannten dritten Elementes (186) gegen den genannten Tisch (28) einen Antriebsaktuator (92) aufweist, der mit dem genannten ersten Element in Wirkverbindung steht.

7. Einrichtung nach Anspruch 6, dadurch gekennzeichnet, daß das genannte Mittel zum Ziehen des genannten dritten Elementes (186) einen Medium-betätigten Kolben (96) umfaßt.

8. Einrichtung nach Anspruch 1, dadurch gekennzeichnet, daß das genannte Mittel zum Ziehen des genannten dritten Elementes (186) gegen den genannten Tisch (28) einen Antriebsaktuator (220) umfaßt, der mit dem genannten dritten Element von oben her in Eingriff gelangt.

9. Einrichtung nach Anspruch 8, dadurch gekennzeichnet, daß das genannte dritte Element einen Stift (222) umfaßt, der sich von dem genannten Tisch nach oben hin erstreckt, sowie eine Klemmstange (225), die derart gestaltet ist, daß sie mit einem Werkstück oder einer Spannvorrichtung in Eingriff gelangt, und daß der genannte Antriebsaktuator (220) eine hydraulische Zylindereinrichtung ist, die über der genannten Stange aufgenommen wird und in Eingriff mit der genannten Klemmstange gelangt.

10. Einrichtung nach einem der Ansprüche 1 bis 9, dadurch gekennzeichnet, daß der genannte Deckel (192) in eingesetztem Zustand im wesentlichen bündig mit der genannten Tischfläche (30) ist.

11. Einrichtung nach einem der Ansprüche 1 bis 9, dadurch gekennzeichnet, daß das genannte Mittel zum Ziehen des genannten dritten Elementes (186) gegen die genannte Tischfläche Kolben- und Zylinder-Flud-Aktuatoren (220) umfaßt, die innerhalb des genannten Tisches (28) unterhalb von dessen oberer Fläche (30) gelagert sind, wobei der genannte Kolben (96) oder der genannte Zylinder (92) mit dem Tisch fest verbunden und das andere dieser beiden Elemente von dem Flud angetrieben ist, und wobei das erste Spannelement (96) jeweils mit dem anderen dieser beiden, also Kolben oder Zylinder, verbunden ist.

12. Einrichtung nach Anspruch 11, dadurch gekennzeichnet, daß das genannte zweite Spannelement (128) einen Stift (166) umfaßt und daß das genannte Mittel zum mechanischen gegenseitigen Verriegeln entsprechende Bohrungen in dem anderen Element, also entweder Kolben (96) oder Zylinder (92) sowie Zapfen (138) auf dem genannten Stift umfaßt, derart gestaltet, um in eine der genannten Bohrungen eingeführt zu werden und eine Verriegelung mit dem jeweiligen anderen Element, also Kolben oder Zylinder, dann herzustellen, wenn der genannte Stift gedreht ist.

13. Einrichtung nach Anspruch 11, dadurch gekennzeichnet, daß das genannte zweite Spannelement ein Stift (166) ist und daß das genannte Mittel zum mechanischen Verriegeln Gewinde (168) hoher Steigung auf dem genannten Stift und dementsprechend mit Gewinde ausgerüstete Fassungen (160) in dem anderen der genannten Elemente, also Kolben oder Zylinder, umfaßt.

14. Einrichtung nach einem der Ansprüche 11 bis 13, umfassend einen Schlitz (95) in dem genannten Tisch, unterhalb und parallel zu der genannten Tischfläche (30) angeordnet, sowie eine Montageplatte (94), die gleitend in dem Schlitz aufgenommen ist, wobei wenigstens einige der genannten Flud-Aktuatoren in der genannten Platte montiert sind und die Platte sowie die genannten einigen der genannten Flud-Aktuatoren als Einheit von dem genannten Tisch (28) abnehmbar sind.

F I G 1

F I G 2

1

FIG. 3

FIG. 4

FIG. 5

FIG. 6

FIG. 7

FIG. 8

FIG. 9

2

**0 006 899**

FIG 10

FIG 12

FIG 11

FIG 13

3

**0 006 899**

F I G. 14

F I G. 15

4